(19) Europäisches Patentamt / European Patent Office / Office européen des brevets

(11) **EP 1 920 994 B1**

(12) **EUROPEAN PATENT SPECIFICATION**

(45) Date of publication and mention
of the grant of the patent:
**26.05.2010 Bulletin 2010/21**

(51) Int Cl.:
**B62D 6/00** (2006.01)

(21) Application number: **06123661.8**

(22) Date of filing: **08.11.2006**

(54) **Roll stability control and roll-over mitigation by steering actuation**

Wankstabilitätsregelung und Verminderung einer Umkippgefahr durch Lenkungsbetätigung

Commande de stabilité en roulis et réduction du risque de retournement par action sur la direction

(84) Designated Contracting States:
**DE FR GB SE**

(43) Date of publication of application:
**14.05.2008 Bulletin 2008/20**

(73) Proprietor: **Ford Global Technologies, LLC**
**Dearborn, MI 48126 (US)**

(72) Inventors:
• **Lemmen, Markus**
**47803, Krefeld (DE)**
• **Wey, Torsten**
**47447, Moers (DE)**
• **Vliem, Edwin**
**5521 SN, Eersel (NL)**

• **Eidam, Dirk-Uwe**
**51427, Bergisch-Gladbach Refrath (DE)**
• **Jacobson, Bengt Johan Henrik**
**435 38, Mölnlycke (SE)**
• **Hultén, Johan**
**41316, Göteborg (SE)**

(74) Representative: **Drömer, Hans-Carsten**
**Ford-Werke Aktiengesellschaft**
**Patentabteilung NH/DRP**
**Henry-Ford-Strasse 1**
**50725 Köln (DE)**

(56) References cited:
CA-A1- 2 304 545     DE-A1- 10 315 965
JP-A- 2004 009 812     KR-A- 2006 068 852
US-A1- 2005 087 389

**Description**

The Invention relates to a Method for reducing a Roll-over event of a vehicle having an electronic controllable steering system (ECS) and an Electronic Control Unit (ECU) according to the preamble of claim 1. Such a method is known for example from US 2005/0087389.

Future driving experience and active safety functions need to be able to influence the steering system by electric control. The steering degrees of freedom in general are steering position (angular position of the road wheels) and steering feel (hand/steering wheel torque). Both degrees of freedom can be actuated respectively controlled by appropriate actuators, which are generally referred to as ECS (Electronic Controllable Steering).

Examples of ECS where the steering position can be controlled are Active Front Steering (AFS), Steer-by-Wire (SbW) and Rear Axle Steering (RAS). Examples of steering systems where the steering feel can be controlled are Electric Power Assisted Steering (EPAS) or combinations like AFS/SbW with EPAS. Next to EPAS, Electro Hydraulic Power Assisted Steering (EHPAS) or any other electric controlled hydraulic assist system (e.g. systems like FEPS, VAPS or eVDP) can also influence the steering torque, usually with a reduced control range vs. EPAS.

US 2005/0087389 discloses a steering system for a vehicle including at least one wheel that pivots to define a steering angle, wherein the steering angle is defined, at least in part, by an input from an operator. The system further comprises at least one sensor adapted to monitor the roll of a vehicle body and a height of the center of gravity of the vehicle from a given point. The system also includes a motor operatively connected to the wheel that supplements the input to the steering angle from the operator, and a controller in operable communication with the sensor and operatively connected to the motor. The controller is adapted to adjust the supplementation of the input to the steering angle from the operator based upon the amount of roll of the vehicle body as monitored by the sensor, and is adapted to supplement the steering angle when the amount of roll of the vehicle body as monitored by the sensor exceeds a calculated maximum value defined at least in part, by the height of the center of gravity of the vehicle, thereby reducing the amount of the vehicle body.

To provide a steering effort control device capable of appropriately suppressing the roll-over of a vehicle, JP 2004009812 proposes that the steering effort control device has an electric power steering for applying steering effort to a steered wheel of a vehicle, when a controller determines the roll-over tendency of the vehicle from a roll angle and determines the tendency to roll-over. The steering effort in a direction of suppressing the roll-over is applied to the steered wheel by the electric power steering.

The KR 20060068852 relates to a roll over apparatus for rising a roll over performance of a vehicle. A damper is made of a cylinder in which two electrodes electrically connected to a generator are separately installed in the side wall of the cylinder, filled by a electrorheological fluid. The electrorheological fluid changes the mechanical properties according to the intensity of the electric field which is generated within the cylinder. Because of changing the mechanical properties (yield stress, viscosity) the damping value of the damper is enlarged. Therefore the roll over performance shall be improved in the fast steering input due to the immediate enlargement of the damping value. The control stability shall also be improved due to the damping value enlargement according to the steering input speed.

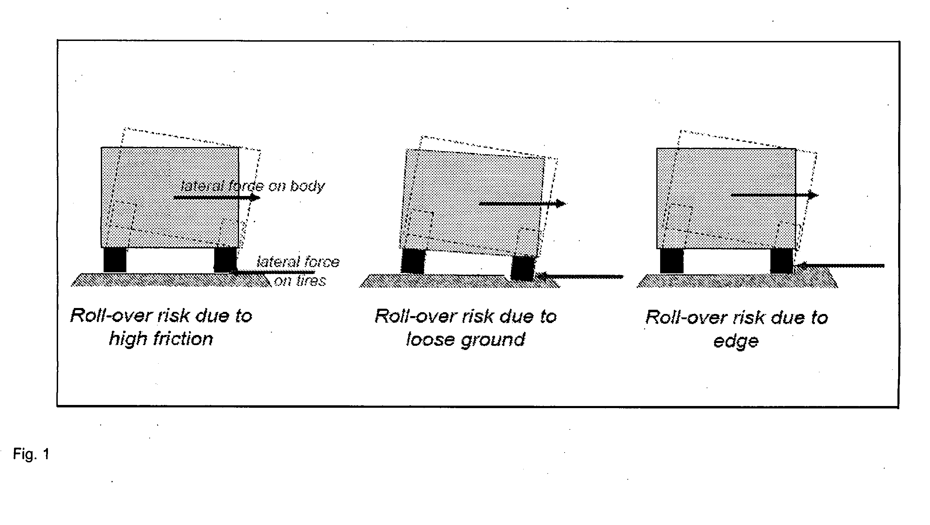

Vehicles, in particular passenger cars can be forced by the driver to roll over, depending on the driver's input and the road conditions. For example, in situations with high road friction, the driver is able to require so large road wheel steering angle that the vehicle rolls over. Instead of high road friction, the same can happen in case of a kerb, an edge on the road or loose ground in which the tire digs itself down. All these situations have in common that roll-over occurs if too high lateral forces are created on the tires. Examples for this are shown in Figure 1.

In the left picture of Figure 1 a Roll-over risk is shown due to high friction. A lateral force on the body of the vehicle (arrow 1) is directed opposed to a lateral force on tires (arrow 2) of the vehicle. In the center picture of Figure 1 a Roll-over risk due to loose ground is depicted, whereby in the right picture of Figure 1 a Roll-over risk due to edge is depicted.

Known overall solution principle is to change (reduce) the lateral forces on the tires. There are already ESC systems (ESC in the sense of the invention is used as an abbreviation for any kind of Electronic Stability Control via brake actuation) in the state of the art which use brake interventions to "brake away" the lateral force, using the fact that the resulting friction force in the road/tire contact patch is limited by a friction circle (Kamm'scher Kreis). However, roll-over mitigation by brake interventions cannot avoid for all critical situations; typical shortfalls are the following:

- One cannot change the lateral force more than reducing it down to zero,
- One cannot brake away the lateral force if it comes from an edge or loose ground,
- Braking can induce a bouncing mode of the whole vehicle, which causes problems for the driver to handle the vehicle shortly after the intervention.

Therefore it is an object of the invention to overcome the above mentioned disadvantages whereby the risk for a Roll-over of the vehicle is mitigated respectively to prevent a vehicle from rolling over.

This task is solved by an active steering control method comprising the features of claim 1. Further advantageous embodiments are disclosed in the dependent claims.

The electronic control unit identifies the occurrence of a Roll-over risk or Roll-over probability, so that the controls generate an advantageous signal in order to steer the road wheels more in the direction in which the vehicle is tending to Roll-over, respectively inhibit the driver from steering away from the Roll-over direction.

Favourably the control algorithm is split into a passive and an active control part.

In a first embodiment (passive approach via steering torque control) it is suitable in the sense of the invention, that a torque assist from the electronic controllable steering system is at least reduced to force the driver to keep a steering wheel velocity below a certain value.

The simplest execution of this kind of control is by continuously changing damping coefficients defining a delta steering torque.

In a second embodiment (passive approach via steering angle control) a steering velocity is limited, whereby the control offsets a steering wheel angle of the driver in case it exceeds a defined velocity at road wheels. Suitably the control determines an actual steering wheel velocity and the corresponding road wheel velocity generating the adoption of variable gear ratio, whereby the control evaluates a desired steering angle by means of input variables of the vehicle state.

In a third embodiment (active approach via steering torque control) the control evaluates a delta assist torque which at least guides the driver to apply the correct steering angle.

In a fourth embodiment (active approach via steering angle control) the control generates an additional difference steering angle to the driver's steering angle in order to generate actively a corrective steering action.

To overcome the a.m. disadvantages, the intention of this invention is to mitigate the risk of provoking a roll-over event, respectively to prevent a vehicle from rolling over, by utilizing an electronic controllable steering system ECS instead of a purely brake based approach. Using steering instead of braking solves the three problems above: Steering can guide the vehicle out of grooves in loose ground and over edges.

Additionally, the bounce mode is avoided, since no pitch is induced. Hence, the preferred solution is to steer road wheels more in the direction in which the vehicle is tending to roll-over, which is to the right as depicted exemplarily in Figure 1, or reduce the opportunity for the driver to steer left. For this purpose a special algorithm is used to achieve the objective. Moreover, beside a stand-alone utilization of steering control the functional integration of a steering control approach with a brake intervention approach is shown.

Preferred embodiments of the present invention are described in the dependent claims as well as below with reference to the accompanying drawings showing:

Fig. 2 Criteria for Roll-over to start,

Fig. 3 passive approach Steering Torque Control,

Fig. 4 passive approach Steering Angle Control,

Fig. 5 active approach Steering Torque Control,

Fig. 6 active approach Steering angle Control, and

Fig. 7 avoiding Roll-Over and Yaw rate Assistance.

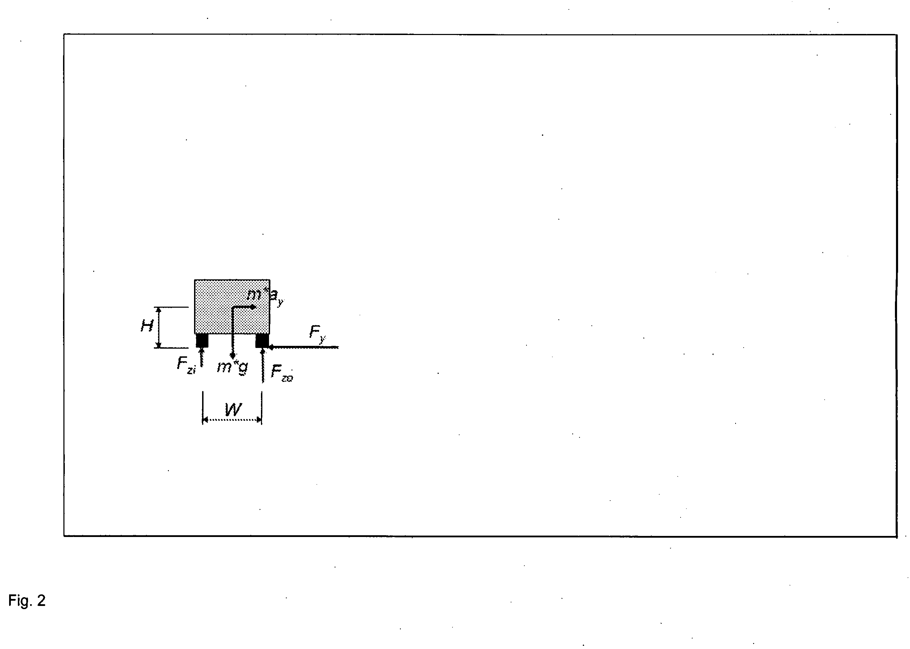

Before a Roll-over can be compensated, it is for some of the below explained control algorithms necessary to identify the occurrence of a roll-over risk. The easiest way to identify the risk to roll-over is to have a look at the statically force equation as described in Figure 2.

As Figure 2 shows, common for all Roll-over situations is the following reasoning:

Roll-over starts if:

$$F_y > F_{y,crit}$$

with

$$F_{y,crit} = W*m*g/(2*H)$$

Since $F_y=F_{yf}+F_{yr}$ (front and rear) the criteria for all Roll-over can be formulated as follows
Roll-Over starts if:

$$F_{yf} > F_{yf,\,crit}$$

with

$$F_{yf,crit} = W*m*g/(2*H)-F_{yr}$$

Moreover road banking, elastic energy in suspension etc. can be included in the expression for / calculation of $F_{yf,crit}$.

The rolling torque induced in the vehicle by the lateral acceleration may not exceed a value defined by height the H of the center of gravity (CoG), vehicle mass m and track width W. This equation does consider neither dynamic maneuvers nor any influence from the suspension design, e. g. the roll axle.

The control part basically splits into a passive and an active control algorithm approach. The passive approach reduces the risk of a roll-over via ECS by preventing the driver to give too much steering amplitude into the vehicle. The control only (re-)acts depending on the actual driver input.

The active control approach analyses the driving situation in more detail and influences the lateral forces in a way to overcome the roll-over.

Dependent on the approach different roll-over maneuvers can be addressed. Combined with the two basic ways of steering control - angle control and torque control -, four different solutions have to be differentiated. What algorithm or a combination of these approaches in the end is implemented depends on the available hardware in a vehicle and is subject to the desired customer functionality.

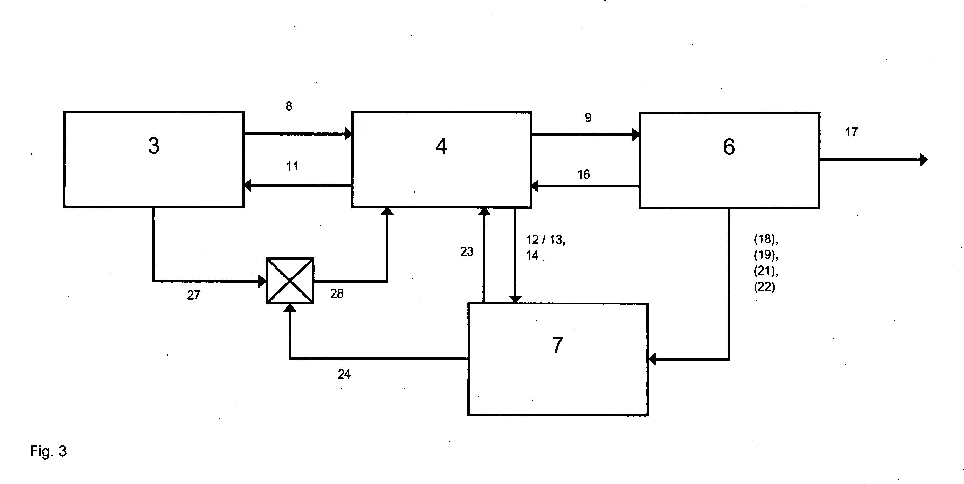

Figure 3 shows the passive approach steering torque control. Block 3 represents the driver. Block 4 represents the steering system, exemplarily an EPAS (Electronic Power Assisted Steering). Block 6 represents the vehicle. Block 7 represents the Electronic control unit (ECU).

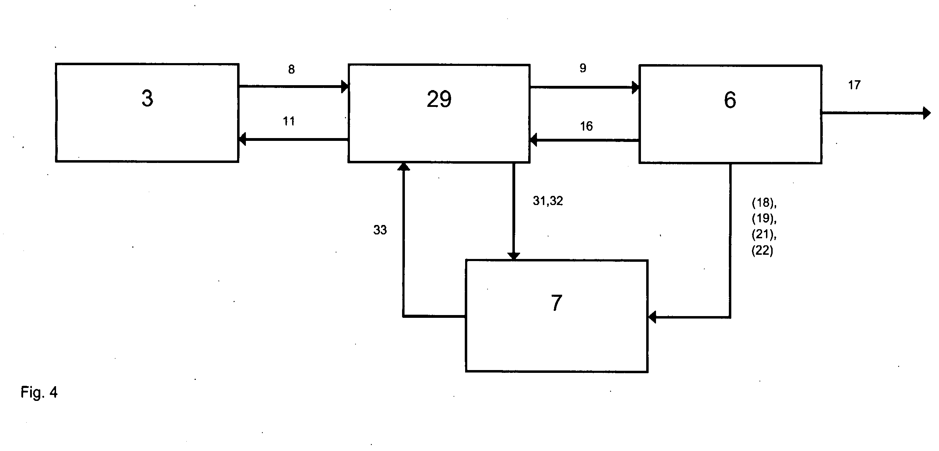

The driver 3 inputs a steering angle signal 8 to the EPAS 4. The EPAS 4 transforms the steering position via the steering ratio into a rack position signal 9 in the vehicle, a torque signal 11 and a steering angle signal 12, a steering velocity signal 13 and a torque assist signal 14. The rack position signal 9 is fed into the vehicle Block 6, whereby a rack force signal 16 is generated and sent to the EPAS 4. The vehicle Block 6 generates a roll motion signal 17. Vehicle state signals such as vehicle speed 18, lateral acceleration 19, yaw rate 21 and longitudinal acceleration 22 are send to the ECU. These signals are not necessary for the approach exemplary depicted in Figure 3, but are of use to improve the algorithm, if they are available. Therefore the reference numbers are written in brackets in Figure 3 (and Figure 4). The EPAS sends the signals 12, 13 and 14 to the ECU which calculates a max. steering velocity signal 23 and a damping coefficient signal 24. The signal 23 is send to the EPAS. The signal 24 is send to an interface 26, which receives steering velocity signal 27 from the driver 3 generating a delta torque assist signal 28 which is send to the EPAS, too.

The approach reduces the risk of a roll-over by preventing the driver from increasing the steering wheel velocity $v_{Steer}$ above a certain value/limit. This value $v_{Steer,max}$ is variable and depending on certain input variables which characterize the actual driving situation, e. g. vehicle speed over ground, longitudinal acceleration, lateral acceleration and yaw rate as well as the road friction level $\mu$ (Figure 3).

Additionally, the steering frequency and actual assist level do influence the value of $v_{Steer,max}$. In case the algorithm in the ECU detects a driving situation which could yield a roll-over situation (Figure 1), the torque assist from the controllable steering system is reduced or even reversed to force the driver to keep the steering wheel velocity below the calculated max. value.

Even if there is no reliable and precise opportunity to identify the existence of a roll-over risk (no availability of vehicle speed over ground and/or longitudinal acceleration and/or lateral acceleration and/or yaw rate), the intervention of the controllable steering could be allowed, as it would not reduce the usual driving functionality of the vehicle from a driver perspective ($v_{Steer,max}$ is above the typical steering wheel velocities a driver utilizes and would only be exceeded in limit handling situations).

The control is executed by means of a continuously changing damping coefficient d(t), which defines the delta

steering torque

$$\Delta T_{Steer} = d(t) \cdot v_{Steer},$$

which is added to or subtracted from the steering torque defined by the usual assist control concept.

This change of the assist torque would prevent a growing lateral acceleration and decreases the risk of a vehicle roll-over in a smooth way without distracting the driver by harsh steering interventions.

The control reacts to the driver's input. As soon as the steering velocity $v_{Steer}$ decreases the intervention decreases as well by means of delta steering torque. If the driving situation is no longer endangering roll-over, the damping coefficient $d(t)$ is reduced smoothly which results also into an additional decreasing intervention $\Delta T_{Steer}$.

In case of roll-over induced by an edge or loose ground this approach (Figure 3) can not provide an assistance, as it only reacts to the drivers steering input and does not actively counter-steer.

In Figure 4 a passive approach utilizing steering angle torque is exemplary depicted, whereby the same signals have same reference numbers as well as blocks, as it has been introduced in Figure 3 already.

Instead of the exemplary shown EPAS 4 in Figure 3, Figure 4 shows an Active Front Steering plus Assist Block 29 (AFS).

In difference to Figure 3 the AFS generates a steering velocity signal 31 and a variable gear ratio (VGR) signal 32 send to the ECU 7. The ECU 7 generates a delta variable gear ratio signal 33 and forwards it to the AFS 29.

This approach, depicted in Figure 4 follows a similar strategy as the one shown in Figure 3 and reduces the risk of roll-over by limiting the steering velocity. As in this approach an actuator for angle overlay is utilized (Figure 4), the control law limits in fact the road wheel steering velocity to $w_{Steer,max}$, even if the driver may input a higher steering wheel velocity.

The detection for roll-over is the same as depicted in Figure 3, but the control will offset the steering wheel angle of the driver in case it exceeds the defined velocity for the road wheels.

Assuming that the AFS implements a VGR (variable gear ratio) functionality, the control law basically utilizes the actual steering wheel velocity $v_{Steer}(t)$ and the corresponding road wheel velocity $w_{Steer}(t) = VGR(t) \cdot v_{Steer}(t)$ and calculates from these values the reduction of the variable gear ratio $\Delta VGR(t)$:

$$\Delta VGR(t) = (VGR(t) \cdot v_{Steer}(t) - w_{Steer,max}) / v_{Steer}(t)$$

As indicated in Figure 4, the reduction calculated in the ECU is then fed back into the steering system and subtracted from the actual selected VGR(t). The VGR(t) usually is defined by a look-up table and usually depends on vehicle speed and steering wheel input. Nevertheless the approach described here, can handle any variation over time of the VGR.

Instead of the VGR approach, an additional delta steering wheel angle or delta road wheel angle can be applied. The algorithm works then in the same manner to the VGR case with adopted output signal.

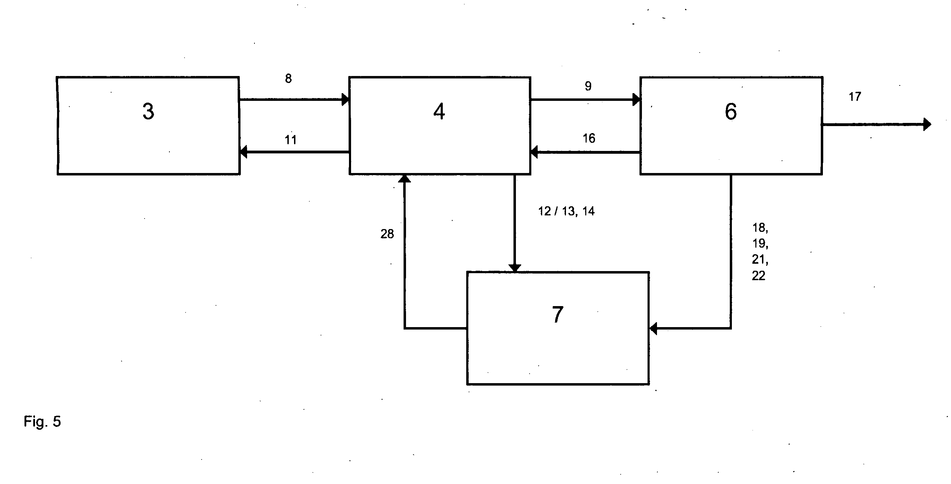

Figure 5 shows exemplary an active approach of steering torque control, whereby same signals as well as blocks have the same reference numbers, so that these are not described in more detail.

The exemplary approach shown in Figure 5 guides the driver "actively" to do the right steering maneuver to minimize the risk of a roll-over. The desired steering angle $s_{Steer,ref}(t)$ to prevent or overcome a roll-over risk is calculated by means of the input variables vehicle speed 18 over ground, longitudinal acceleration 22, lateral acceleration 19 and yaw rate 21.

Based on

- the difference between the actual measured driver steering input (steering wheel angle, steering wheel velocity) and the desired steering angle and
- the actual torque assist level,

a delta assist torque 28 is computed, which guides or even forces the driver to apply the correct steering angle (Figure 5). If the driver rejects the torque assistance by not steering in the desired direction the delta assist torque 28 can be increased up to a certain upper level for the resulting torque assist. Above that upper bound no further assist interaction may occur, so that the driver has the opportunity to overrule the steering request/guidance.

This approach could provide roll-over prevention in standard driving situations and also on certain ground conditions like loose ground or edges.

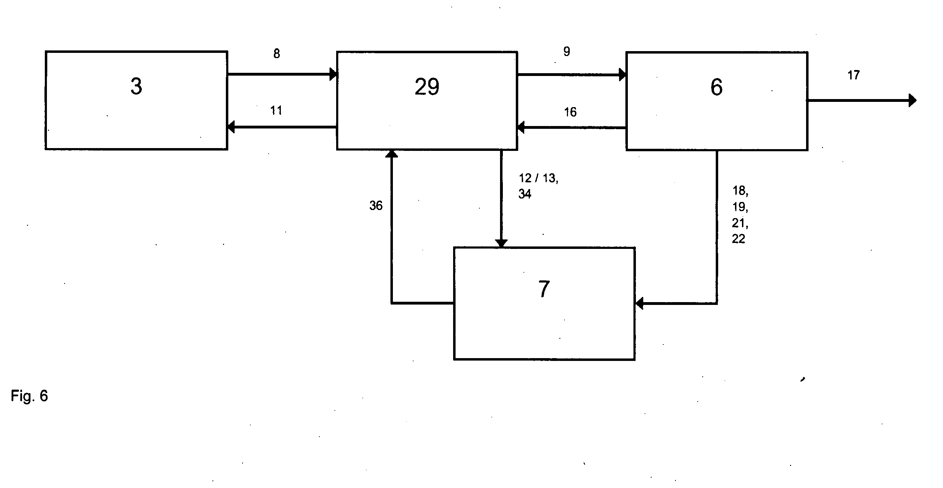

Figure 6 exemplarily shows an active approach of steering angle control, whereby the same signals as well as blocks have the same reference numbers. The signals 12, 13 and a road wheel angle signal 34 is send to the ECU 7, which generates a delta steering wheel angle signal 36 forwarding it to the AFS 29.

The approach exemplary shown in Figure 6 utilizes steering position control. The road wheels can be turned without turning the hand wheel, as it is possible e.g. in the case of AFS.

Hence, the control law can basically force the road wheels to follow the desired road wheel position calculated from the desired steering angle $s_{Steer,ref}(t)$ defined in the example of Figure 5. Similar to the case depicted in Figure 5 the same input variables are used to calculate $s_{Steer,ref}(t)$.

If the driver induced road wheel angle differs from the desired road wheel angle the AFS actuator generates an additional difference steering angle to the driver's steering angle in order to reduce the roll-over risk, i.e. generate actively the corrective steering action (Figure 6).

This approach could provide roll-over prevention in standard driving situations and also on certain ground conditions like loose ground or edges.

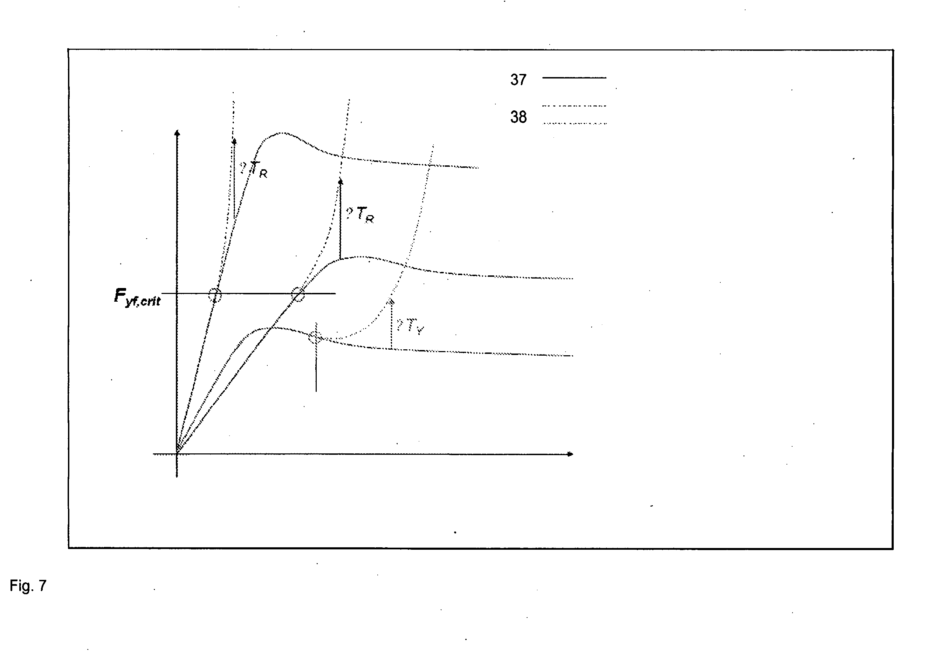

When applying one of the approaches or a combination of these depicted in Figures 3 to 6, an integration with yaw stability control by steering is favorable. One simple and straight forward way in doing so, is to utilize the concept of "co-existence". That is possible due to the fact, that roll-over and yaw stability interventions act in different driving situations (Figure 7). Roll-over intervention happens when a certain force is exceeded. Yaw intervention happens, in principle, when a certain slip angle is exceeded (e.g. implemented as a certain delta angle calculated from the side slip angle where the peak force was detected).

In Figure 7 the solid lined graphs 37 represent a lateral force on front axle $F_{yf}$, whereby the dotted lines 38 represent the steering wheel torque, drawn with a scale such that this is equal to the lateral force when no stability control assistance is active. The term $?T_R$ represents the additional steering wheel torque for Roll-over assistance, whereby the term $?T_y$ represents the additional steering wheel torque for yaw rate assistance. The x-coordinate represents the wheel slip angle $?_f$ which is the same as steering wheel angle - $V_{yf}/V_x$. In the Diagram of Figure 7 the term $?T_R$ and $?T_y$ have the meaning of deltaT$_R$ and deltaT$_y$ ($\Delta T_R$; $\Delta T_y$), whereby the term $?_f$ has the meaning of $\alpha_f$.

**Claims**

1. Method for reducing a risk of or avoiding a roll-over event of a vehicle, having means of an electronic controllable steering system and an electronic control unit, whereby the electronic control unit identifies the occurrence of the roll-over risk, such that a control mean generates a signal in order to steer the road wheels more into the direction in which the vehicle is tending to roll-over
**characterized in, that**
the control is split in a passive and an active control algorithm, whereby both approaches can be combined with steering torque control and/or steering angle control respectively, and whereby passive control algorithm (re-)acts depending on the actual driver input preventing the driver to give too much steering amplitude into the vehicle, and whereby the active control algorithm analyses the driving situation influencing the lateral forces.

2. Method of claim 1
**characterized in, that**
a torque assist from the electronic controllable steering system is at least reduced to force the driver to keep a steering wheel velocity below a certain value.

3. Method of claim 1 or 2,
**characterized in, that**
the control is executed by means of a continuously changing damping coefficient defining a delta steering torque.

4. Method of one of the preceding claims,
**characterized in, that**
a steering velocity is limited, whereby the control offsets a steering wheel angle by the driver in case it exceeds a defined velocity at road wheels or steering wheels.

5. Method of one of the preceding claims,
**characterized in, that**
the control determines an actual steering wheel velocity and the corresponding road wheel velocity generating the reduction of variable gear ratio or generating an delta road wheel angle or delta steering wheel angle.

6. Method of one of the preceding claims,
   **characterized in, that**
   the control evaluates a desired steering angle by means of input variables of vehicle state.

7. Method of one of the preceding claims,
   **characterized in, that**
   the control evaluates a delta assist torque which at least guides the driver to apply the correct steering angle.

8. Method of one of the preceding claims,
   **characterized in, that**
   the control generates an additional difference steering angle to the driver's steering angle in order to generate actively a corrective steering action.


**Patentansprüche**

1. Verfahren zur Verringerung der Gefahr oder Vermeidung eines Umkippereignisses eines Fahrzeugs mit Mitteln eines elektronisch steuerbaren Lenksystems und einer elektronischen Steuereinheit, wobei die elektronische Steuereinheit den Eintritt der Umkippgefahr identifiziert, so dass ein Steuermittel ein Signal erzeugt, um die Straßenräder mehr in die Richtung zu lenken, in die das Fahrzeug zum Umkippen neigt,
   **dadurch gekennzeichnet, dass**
   die Steuerung in einen passiven und einen aktiven Steueralgorithmus geteilt ist, wobei beide Ansätze mit Lenkmomentsteuerung bzw. Lenkwinkelsteuerung kombiniert werden können und wobei der passive Steueralgorithmus in Abhängigkeit von der Fahreristeingabe (re)agiert und den Fahrer daran hindert, zu viel Lenkausschlag in das Fahrzeug zu geben, und wobei der aktive Steueralgorithmus die Fahrsituation analysiert und die Seitenkräfte beeinflusst.

2. Verfahren nach Anspruch 1,
   **dadurch gekennzeichnet, dass**
   eine Momentenunterstützung von dem elektronisch steuerbaren Lenksystem zumindest reduziert ist, um den Fahrer dazu zu zwingen, eine Lenkradgeschwindigkeit unter einem bestimmten Wert zu halten.

3. Verfahren nach Anspruch 1 oder 2,
   **dadurch gekennzeichnet, dass**
   die Steuerung mittels eines sich kontinuierlich ändernden Dämpfungskoeffizienten, der ein Deltalenkmoment definiert, durchgeführt wird.

4. Verfahren nach einem der vorhergehenden Ansprüche,
   **dadurch gekennzeichnet, dass**
   eine Lenkgeschwindigkeit begrenzt wird, wobei die Steuerung einen Lenkradwinkel von dem Fahrer kompensiert, falls er eine definierte Geschwindigkeit der Straßenräder oder Lenkräder überschreitet.

5. Verfahren nach einem der vorhergehenden Ansprüche,
   **dadurch gekennzeichnet, dass**
   die Steuerung eine Istlenkradgeschwindigkeit und die entsprechende Straßenradgeschwindigkeit bestimmt und dabei die Verringerung der variablen Übersetzung oder einen Deltastraßenradwinkel oder Deltalenkradwinkel erzeugt.

6. Verfahren nach einem der vorhergehenden Ansprüche,
   **dadurch gekennzeichnet, dass**
   die Steuerung einen gewünschten Lenkwinkel mittels Eingangsgrößen über den Fahrzeugzustand bewertet.

7. Verfahren nach einem der vorhergehenden Ansprüche,
   **dadurch gekennzeichnet, dass**
   die Steuerung ein Deltaunterstützungsmoment bewertet, das den Fahrer mindestens anleitet, den richtigen Lenkwinkel einzuschlagen.

8. Verfahren nach einem der vorhergehenden Ansprüche,
**dadurch gekennzeichnet, dass**
die Steuerung einen zusätzlichen Differenzlenkwinkel zu dem Lenkwinkel des Fahrers erzeugt, um aktiv einen korrigierenden Lenkvorgang zu erzeugen.

**Revendications**

1. Procédé pour réduire un risque de retournement ou éviter le retournement d'un véhicule, au moyen d'un système de direction à commande électronique et d'une unité de commande électronique, l'unité de commande électronique identifiant la présence du risque de retournement, de façon à ce qu'un moyen de commande produise un signal afin de diriger les roues porteuses plus dans la direction dans laquelle le véhicule à tendance à se retourner,
**caractérisé en ce que**
la commande est divisée en un algorithme de commande passif et un algorithme de commande actif, les deux approches pouvant être combinées avec la commande du couple de direction et/ou la commande de l'angle de direction respectivement, et l'algorithme de commande passif (ré)agissant suivant l'action réelle du conducteur, empêchant le conducteur de donner une amplitude de direction trop grande dans le véhicule, et l'algorithme de commande actif analysant la situation de conduite influençant les forces latérales.

2. Procédé selon la revendication 1,
**caractérisé en ce que**
une assistance du couple venant du système de direction à commande électronique est au moins réduite afin de forcer le conducteur à maintenir une vitesse des roues directrices en dessous d'une certaine valeur.

3. Procédé selon la revendication 1 ou 2,
**caractérisé en ce que**
la commande est exécutée au moyen d'un coefficient d'amortissement changeant constamment définissant un couple de direction delta.

4. Procédé selon l'une quelconque des revendications précédentes,
**caractérisé en ce que**
une vitesse des roues directrices est limitée, la commande compensant un angle des roues directrices par le conducteur au cas où il dépasserait une vitesse définie au niveau des roues porteuses ou des roues directrices.

5. Procédé selon l'une quelconque des revendications précédentes,
**caractérisé en ce que**
la commande détermine une vitesse réelle des roues directrices et la vitesse correspondante des roues porteuses produisant la réduction du rapport d'engrenage variable ou produisant un angle delta des roues porteuses ou un angle delta des roues directrices.

6. Procédé selon l'une quelconque des revendications précédentes,
**caractérisé en ce que**
la commande évalue un angle de direction désiré au moyen de variables d'entrée de l'état du véhicule.

7. Procédé selon l'une quelconque des revendications précédentes,
**caractérisé en ce que**
la commande évalue un couple d'assistance delta qui guide au moins le conducteur à appliquer l'angle de direction correct.

8. Procédé selon l'une quelconque des revendications précédentes,
**caractérisé en ce que**
la commande produit un angle de direction de différence supplémentaire à l'angle de direction du conducteur afin de produire une action de direction corrective.

Roll-over risk due to high friction

Roll-over risk due to loose ground

Roll-over risk due to edge

Fig. 1

EP 1 920 994 B1

Fig. 2

EP 1 920 994 B1

Fig. 3

Fig. 4

Fig. 5

Fig. 6

EP 1 920 994 B1

37 ——————

38 ⋯⋯⋯⋯

$F_{yf,crit}$

$?T_R$

$?T_R$

$\gamma T_Y$

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050087389 A
- JP 2004009812 B

- KR 20060068852